# FASCICULE DE BREVET EUROPEEN

(11) **EP 2 999 649 B1**
(45) Date de publication et mention de la délivrance du brevet: **01.11.2017**
(21) Numéro de dépôt: 14745182.7
(22) Date de dépôt: 23.06.2014
(51) Int. Cl.: B65G 37/02, B65G 1/04

(54) **MAGASIN AUTOMATISE ET UNITÉ DE PRODUCTION DE PRODUITS MANUFACTURES LE COMPORTANT**
AUTOMATISIERTES MAGAZIN UND DAMIT AUSGESTATTETE PRODUKTIONSEINHEIT FÜR FERTIGPRODUKTE
AUTOMATED MAGAZINE AND MANUFACTURED-PRODUCT PRODUCTION UNIT COMPRISING SAME

(30) Priorité: 21.06.2013 FR 1301458
(43) Date de publication de la demande: 30.03.2016
(73) Titulaire: Solignac, Jean Pierre, 34270 Saint Mathieu de Tréviers (FR)
(72) Inventeur: Solignac, Jean Pierre, 34270 Saint Mathieu de Tréviers (FR)
(74) Mandataire: Cornuejols, Georges
(86) Numéro de dépôt international: PCT/FR2014/051560
(87) Numéro de publication internationale: WO 2014/202922

(56) Documents cités:
- JP-A- S58 202 284
- JP-U- S57 124 503
- US-A- 3 973 683

## Description

### DOMAINE TECHNIQUE DE L'INVENTION

La présente invention concerne un magasin automatisé et une unité de production de produits manufacturés le comportant. La présente invention est des domaines des matériels et des techniques utilisés pour le stockage et pour la fabrication de produits manufacturés.

### ETAT DE LA TECHNIQUE

Les magasins automatisés connus de l'état de la technique comprennent des rayonnages agencés en rangées parallèles définissant des cellules de stockage identifiées par un système informatique. Ces rayonnages s'étendent aussi bien en hauteur qu'en longueur et les cellules de stockage sont définies par des emplacements occupés par des parties d'étagères ou des tiroirs de stockage des objets. Les coordonnées de chaque cellule d'une même rangée peuvent être ainsi définies par une altitude par rapport au sol et par une distance à partir d'une origine associée à la rangée correspondante. Les rayonnages sont généralement disposés par paires, dos-à-dos. Ces différentes rangées sont régulièrement écartées les unes des autres afin de définir des couloirs de circulation de robots manipulateurs commandés à distance par le système informatique. Ces robots manipulateurs comprennent, chacun, un bras de préhension déplaçable selon les trois axes de l'espace pour être amené face à une cellule soit pour y déposer un objet à stocker soit pour y prélever un objet. Ces objets peuvent être des éléments palettisés.

Du fait de la dimension des rangées, les robots manipulateurs sont lents et les délais de dépose ou de prise d'un objet sont trop importants.

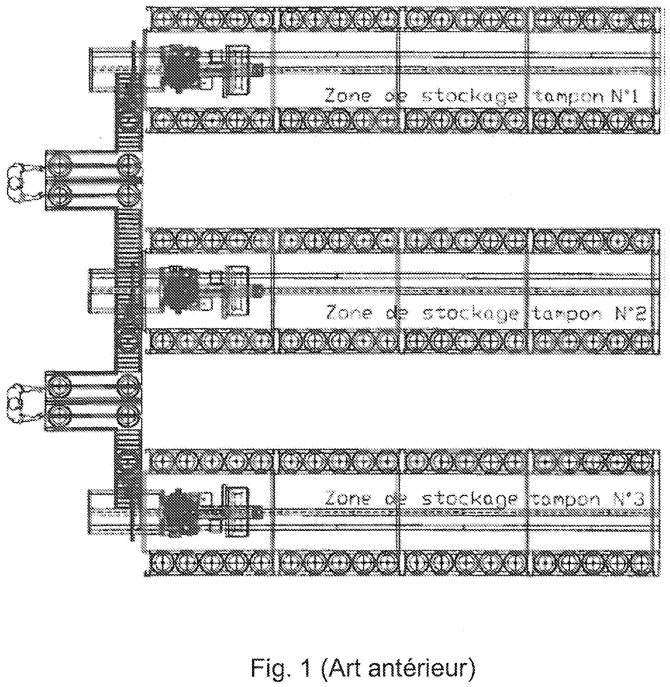

Un tel état de la technique peut être illustré par la figure 1 qui montre un magasin automatisé comprenant plusieurs rangées de rayonnage espacées les unes des autres pour définir des couloirs de circulation de robots manipulateurs aptes à prélever des objets, en l'occurrence des cuves, dans des cellules des rayonnages et les déposer sur des tapis convoyeur disposés entre le magasin et des postes de travail. On peut voir sur cette figure que chaque couloir de circulation débouche sur un convoyeur horizontal associé à un poste de travail. Ce poste de travail comprend essentiellement deux tapis sans fin en relation de communication avec le convoyeur.

De telles dispositions présentent un certain nombre d'inconvénients.

D'une part, les robots manipulateurs ne peuvent se déplacer que dans le couloir associé et ne peuvent être amenés vers un autre couloir de circulation. D'autre part, les postes de travail sont associés à un convoyeur commun pour leur alimentation ou l'évacuation des produits manufacturés. Une telle disposition implique l'établissement de priorités pour l'alimentation des postes de travail et est de nature à ralentir la production. JP 58-202284 décrit un magasin selon le préambule de la revendication 1.

### OBJET DE L'INVENTION

La présente invention vise à remédier à tout ou partie de ces inconvénients.

À cet effet, la présente invention vise un magasin d'objets sous forme de matières premières ou de composants de base, selon la revendication 1, qui comporte :
- une pluralité d'aires de stockage des objets, au moins une aire de stockage, dite supérieure, étant superposée à au moins une aire de stockage dite inférieure, chaque aire de stockage comprenant plusieurs emplacements de stockage des objets formés sur le sol de ladite aire de stockage,
- au moins un passeur apte à déplacer des objets depuis une aire de stockage supérieure à une aire de stockage inférieure, et réciproquement,
- pour chaque aire de stockage supérieure, au moins un robot manipulateur apte à prélever un objet dans l'un des emplacements de stockage et le transporter vers un passeur, et réciproquement et
- pour chaque aire de stockage inférieure, au moins un robot manipulateur apte à prélever un objet dans l'un des emplacements de stockage et le transporter vers un poste de travail, et réciproquement, et apte à prélever un objet dans le passeur et le transporter vers l'un des emplacement de stockage ou vers un poste de travail, et réciproquement,
chaque robot manipulateur étant apte à évoluer au-dessus d'une aire de stockage lors du transport.

Grâce à ces dispositions, la surface occupée par le magasin est réduite puisque le stockage est effectué sur plusieurs aires superposées.

Dans des modes de réalisation particuliers, chaque aire de stockage est plane et horizontale. Selon l'invention, le robot manipulateur est monté de manière mobile sur deux rails horizontaux installés fixement au-dessus et à distance de l'aire de stockage et au-dessus de deux côtés de ladite aire de stockage, et que ce robot manipulateur comprend un support horizontal motorisé monté de manière mobile sur les deux rails, ledit support horizontal étant formé de deux longerons perpendiculaires à la direction des rails de guidage et de deux traverses d'extrémité, ledit robot manipulateur comprenant de plus un chariot motorisé monté de manière mobile sur et le long des deux longerons du support horizontal motorisé, ledit chariot motorisé portant une tête de préhension mobile de bas en haut et réciproquement. Selon l'invention, la tête de préhension comprend un préhenseur comprenant deux griffes de préhension opposées, deux bras support verticaux, portant respectivement, en extrémité inférieure, les deux griffes de préhension, et un mécanisme moteur d'actionnement des deux bras support en éloignement ou rapprochement l'un de l'autre. Selon l'invention, le mécanisme moteur d'actionnement comprend un organe moteur possédant un arbre de sortie rotatif accouplé à une vis horizontale d'actionnement, fixe en translation, comprenant deux zones filetées opposées, dont une possède un pas à droite et l'autre un pas à gauche, chaque zone filetée recevant une douille filetée, fixe en rotation, les deux bras support étant portés, pour l'un, par l'une des douilles filetées et, pour l'autre, par l'autre douille filetée et les dits bras support s'étendant vers le bas depuis les douilles filetées.

Dans des modes de réalisation particuliers, chaque griffe de préhension se présente sous la forme d'une paroi plane horizontale fixée par une de ses bordures au bras support correspondant, la bordure opposée de la griffe de préhension présentant une échancrure de dégagement.

Dans des modes de réalisation particuliers, le préhenseur de la tête de préhension est porté en extrémité inférieure d'un support télescopique de la tête de préhension, ledit support télescopique étant déployable et rétractable verticalement sous l'effet de l'action d'un moyen moteur.

Dans des modes de réalisation particuliers, le support télescopique comprend un élément tubulaire inférieur, contenu, de section droite polygonale et un élément tubulaire supérieur contenant, de section droite polygonale, recevant en coulissement l'élément tubulaire inférieur.

Dans des modes de réalisation particuliers, l'organe moteur d'actionnement de la vis horizontale, ladite vis et les douilles filetées sont montées dans l'élément tubulaire inférieur et que ledit élément tubulaire inférieur comprend en partie inférieure une paroi horizontale d'obturation comprenant deux lumières longitudinales de passage des deux bras support, la partie inférieure de chaque bras support et les griffes de préhension étant externes à l'élément tubulaire inférieur.

Dans des modes de réalisation particuliers, le magasin objet de la présente invention présente une ossature support et plusieurs aires de stockage supportées par l'ossature support, lesdites aires de stockage comprenant leur propre robot manipulateur, un passeur vertical étant disposé entre deux aires de stockage.

Dans des modes de réalisation particuliers, le magasin objet de la présente invention comprend :
- un ensemble de guidage disposé au-dessus du sol,
- un châssis support porté par l'ensemble de guidage et mobile sur ce dernier, selon un axe longitudinal horizontal de la machine ;
dans lequel au moins un robot manipulateur comporte :
- un chariot de transport, monté de manière mobile sur le châssis support selon un axe horizontal perpendiculaire à l'axe longitudinal de la machine,
- un moyen élévateur porté par le dit chariot, ledit moyen élévateur comportant un élément porteur élévateur mobile selon un axe vertical,
- un moyen de pesage porté par l'élément porteur élévateur du moyen élévateur, ledit moyen de pesage comportant un organe sur lequel est appliquée la charge à peser et
- un moyen de préhension des objets unitairement, lié mécaniquement à l'organe du moyen de pesage.

Dans des modes de réalisation particuliers, l'ensemble de guidage comprend deux rails horizontaux parallèles disposés selon un même niveau de hauteur, les dits rails étant solidaires d'une structure porteuse.

Dans des modes de réalisation particuliers, le châssis support est équipé d'organes de roulement engagés sur les rails de guidage, le châssis support étant équipé d'un organe moteur pour assurer son déplacement le long des rails.

Dans des modes de réalisation particuliers, le châssis support comprend deux rails de guidage parallèles horizontaux, disposés selon un même niveau de hauteur, les dits rails étant perpendiculaires aux rails de l'ensemble de guidage.

Dans des modes de réalisation particuliers, le chariot est doté d'organes de roulement engagés sur les rails de guidage du châssis support, le chariot étant équipé d'un organe moteur (31) pour assurer son déplacement le long des dits rails de guidage.

Dans des modes de réalisation particuliers, l'élément porteur élévateur du moyen élévateur est constitué par une platine horizontale et que cet élément porteur élévateur est déplaçable en hauteur par un moyen moteur porté par le chariot de transport, le moyen de pesage étant installé sur la platine horizontale.

Dans des modes de réalisation particuliers, le moyen moteur du moyen élévateur est constitué par plusieurs colonnes filetées verticales engagées par leur extrémité supérieure et inférieure dans des paliers de guidage portés par l'ossature du chariot, par des écrous engagés en vissage sur les colonnes et fixés à la platine horizontale et par un mécanisme d'actionnement en rotation des dites colonnes autour de leur axe longitudinal, lequel mécanisme comprend des poulies crantées accouplées respectivement aux colonnes filetées, une courroie crantée engagée sur les poulies crantées et sur un pignon cranté accouplé à l'arbre de sortie rotatif d'un moteur pas à pas installé fixement sur un support approprié fixé à l'ossature du chariot.

Dans des modes de réalisation particuliers, le moyen de pesage est constitué par au moins une balance comportant un plateau.

Dans des modes de réalisation particuliers, le moyen de préhension est constitué par deux bras verticaux doté en extrémité inférieure de deux crochets de préhension.

Dans des modes de réalisation particuliers, les deux bras du système de préhension sont solidaires du plateau de la balance.

Dans des modes de réalisation particuliers, chaque crochet est constitué d'une plaque verticale de forme triangulaire, montée sur une embase horizontale, formant pointe vers le haut.

Dans des modes de réalisation particuliers, le magasin objet de la présente invention est équipée d'une unité de traitement et de gestion (200) apte à traiter les différents signaux électriques qu'elle reçoit des divers composants et apte à gérer le fonctionnement de ces derniers.

En ce qui concerne les unités de production, les magasins connus n'ont de fonction que celle de stockage et ne sont pas conçus pour être intégrés dans un processus de fabrication. En effet, un processus dans lequel l'exécution d'un ordre de production impose un passage sur différents postes de travail ne peut fonctionner correctement que si on intègre entre chaque poste une zone tampon. Une zone tampon permet d'assurer une autonomie à chaque poste de travail, permet de gérer l'ordre de passage des ordres de production sur chaque poste en fonction des priorités et permet d'éviter le blocage de la production en cas de défaillance ou indisponibilité de l'un des postes de travail.

De manière classique, ces zones tampon sont formées par des convoyeurs de manutention, des convoyeurs de stockage temporaire et un réseau d'aiguillage.

Selon un aspect, la présente invention vise une unité de production de produits manufacturés, comprenant :
- un magasin objet de la présente invention et
- au moins un poste de travail à proximité du magasin,
chaque poste de travail étant disposé de manière attenante à une aire de stockage du magasin.

### BREVE DESCRIPTION DES FIGURES

D'autres avantages, buts et caractéristiques de l'invention apparaîtront à la lecture de la description d'une forme préférée de réalisation, donnée à titre d'exemple non limitatif en se référant aux dessins annexés en lesquels :
- la figure 1 est une vue de dessus d'un magasin automatisé connu dans l'art antérieur,
- la figure 2a est une vue de coté d'une unité de production objet de la présente invention,
- la figure 2b est une vue de dessus de l'unité de production illustrée en figure 2a,
- la figure 2c est une vue de face de l'unité de production illustrée en figures 2a et 2b,
- la figure 3 est une vue de face d'un magasin comprenant plusieurs aires de stockage superposées,
- la figure 4 est une vue en perspective d'une tête de préhension,
- la figure 5 est une vue en écorché d'une tête de préhension,
- la figure 6 est une vue de profil d'une machine conforme à l'invention, selon une première forme de réalisation, avec différentes positions de l'ensemble châssis support et chariot de transport,
- la figure 7 est une vue de dessus de la machine selon la figure 6,
- la figure 8 est une vue de face de la machine selon la figure 6,
- la figure 9 est une vue de face d'une machine selon une seconde forme de réalisation,
- la figure 10 est une vue de dessus de détail d'une machine selon l'invention, montrant le châssis support et le chariot de transport,
- la figure 11 est une vue du chariot de transport de la machine selon l'invention et
- la figure 12 est une vue de dessus du moyen élévateur.

### DESCRIPTION D'EXEMPLES DE REALISATION DE L'INVENTION

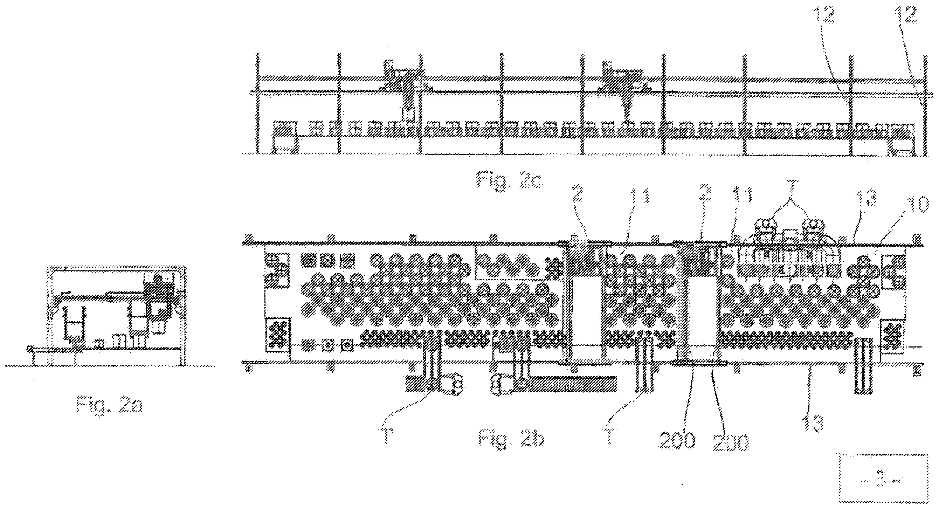

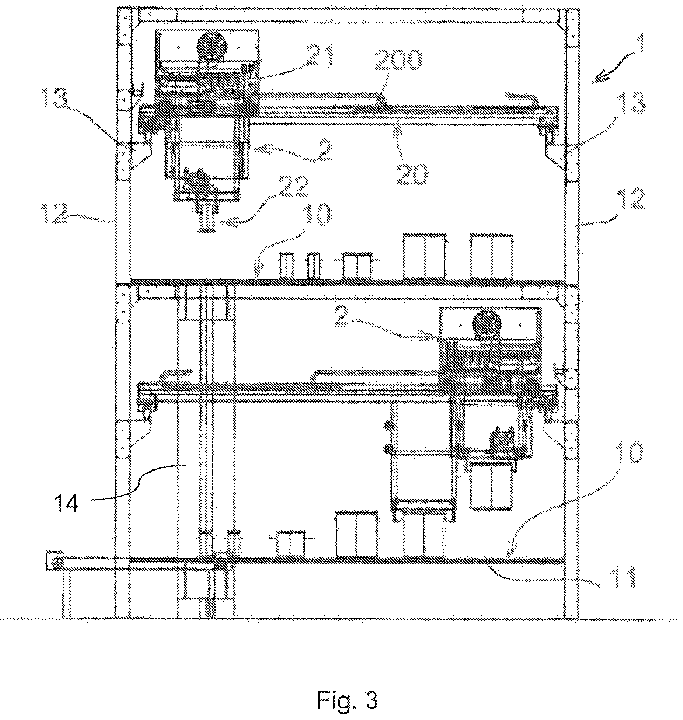

Telle que représentée, l'unité de production de produits manufacturés comprend un magasin 1 (figure 3) d'objets sous forme de matières premières ou de composants de base et au moins un poste de travail T (figure 2b) disposé de manière attenante au magasin. L'unité de production comprend, de plus, une unité de traitement et de commande 3 qui pilote au moins un robot manipulateur 2.

Le magasin 1 comprend des emplacements 11 de stockage des objets et au moins un robot manipulateur 2 apte à prélever un objet dans l'un des emplacements 11 de stockage afin qu'il soit transporté vers un poste de travail T. Réciproquement, le robot manipulateur 2 est apte à prélever les objets au niveau de chaque poste de travail T pour, notamment, les transporter vers l'un des emplacements 11 de stockage ou vers un autre poste de travail T.

Le magasin 1 est formé d'au moins une aire 10 de stockage des objets, comprenant plusieurs emplacements 11 de stockage des objets, emplacements formés sur le sol de ladite aire 10 de stockage. Chaque robot manipulateur 2 est apte à évoluer au-dessus d'au moins une aire 10 de stockage ou d'une partie de cette dernière en vue du transport d'objets entre au moins un poste de travail T et une dite aire de stockage 10 et réciproquement.

Comme on peut le voir en figure 3, l'aire de stockage 10 est plane et horizontale et peut être constituée par un sol cimenté ou par un plancher surélevé, du genre caillebotis par exemple.

Le magasin 1 comprend en outre une ossature porteuse métallique, formée de montants verticaux 12 correctement entretoisés. Ces montants 12 portent à distance du sol deux rails de guidage horizontaux 13, parallèles, prévus pour recevoir le robot manipulateur 2.

Chaque robot manipulateur 2 est mobile le long des rails de guidage 13 ou seulement sur une fraction de la longueur de ces rails 13. Selon l'invention, un robot manipulateur 2 comprend un support horizontal motorisé 20 monté de manière mobile sur les deux rails et un chariot motorisé 21 monté de manière mobile sur le support horizontal 20.

Le support horizontal est formé de deux longerons parallèles 200, horizontaux, perpendiculaires à la direction générale des rails de guidage 13. Ces longerons 200 sont réunis rigidement en extrémités par des traverses d'entretoisement. Ce support horizontal est doté de galets de roulement par lesquels il prend appui sur les rails de guidage. L'un au moins de ces galets est accouplé à un organe moteur, par exemple du type pas à pas ou à encodeur, afin de commander le déplacement et contrôler la position du support le long des rails 13.

Le chariot motorisé 21 est monté de manière mobile sur et le long des deux longerons 200 (figures 2b et 3). Ce chariot est doté de galets de roulement par lesquels il prend appui sur les longerons 200. Les longerons 200 sont agencés en rail de guidage. L'un au moins des galets de roulement est accouplé à un organe moteur, par exemple du type pas à pas ou à encodeur, afin de commander le déplacement et contrôler la position du chariot le long des longerons 200. Le chariot 21 porte une tête de préhension 22, mobile de bas en haut et réciproquement sous l'effet de l'action d'un organe moteur.

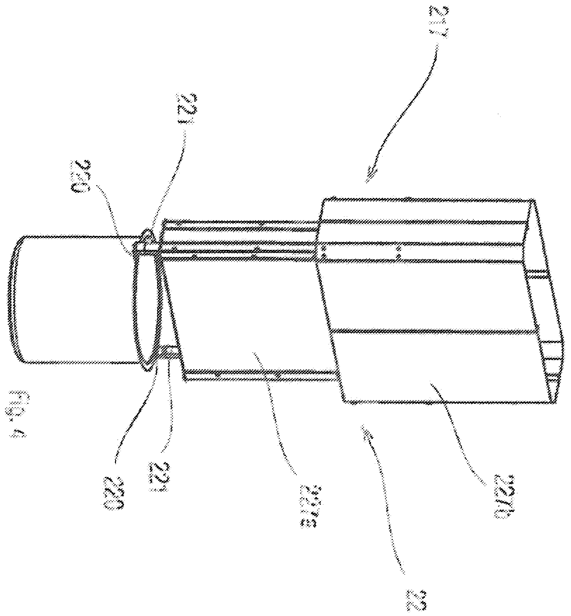

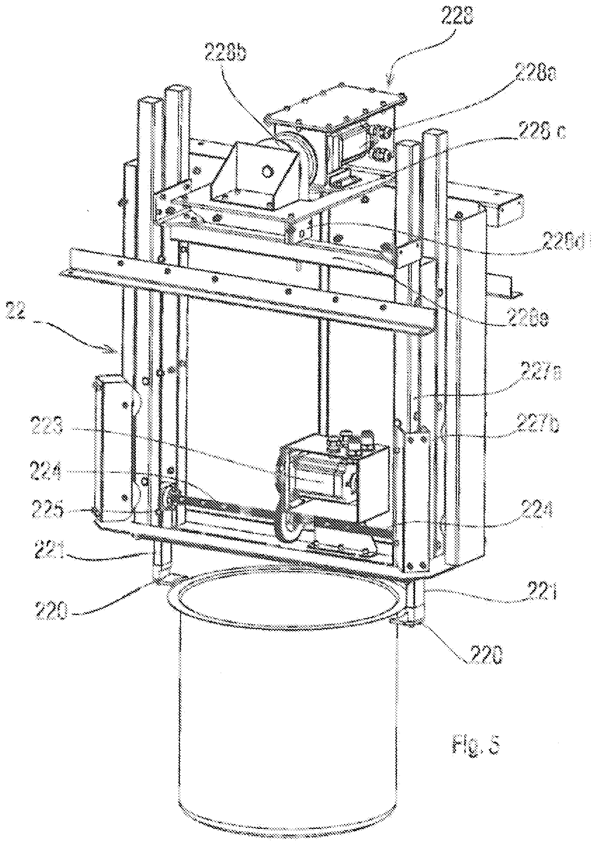

Comme on l'observe en figures 4 et 5, la tête de préhension 22 comprend un préhenseur comprenant deux griffes de préhension 220 opposées, deux bras support 221 verticaux portant respectivement, en extrémité inférieure, les deux griffes de préhension, et un mécanisme moteur d'actionnement des deux bras support en éloignement ou rapprochement l'un de l'autre.

Le robot manipulateur 2 sous la commande de l'unité de traitement 3 peut ainsi être amené d'abord au-dessus d'un emplacement 11 de stockage pour y prélever un objet et ensuite transporter cet objet vers un poste de travail T. Inversement après traitement, l'objet pourra être prélevé par le robot manipulateur 2 sur le poste de travail T et transporter vers un emplacement 11 de stockage temporaire.

Selon la forme préférée de réalisation, chaque griffe 220 se présente sous la forme d'une paroi plane horizontale fixée par une de ses bordures au bras support 221 correspondant, la bordure opposée de la griffe de préhension présentant par exemple une échancrure de dégagement. Les griffes 220 par leur bordure échancrée sont tournées l'une vers l'autre. Selon l'invention, le mécanisme moteur d'actionnement des deux bras 221 en éloignement ou rapprochement l'un de l'autre, comprend un organe moteur 223 possédant un arbre de sortie rotatif accouplé à une vis horizontale d'actionnement 224, fixe en translation, comprenant deux zones filetées opposées, dont une possède un pas à droite et l'autre un pas à gauche. Chaque zone filetée reçoit une douille filetée 225, fixe en rotation, les deux bras support 221 étant porté pour l'un par l'une des douilles 225 et pour l'autre par l'autre douille filetée. Les deux bras s'étendant vers le bas depuis les douilles filetées. L'organe moteur 223 est constitué par exemple par un moteur pas à pas.

Avantageusement, le préhenseur est porté en extrémité inférieure d'un support télescopique 227 que présente la tête de préhension 22. Le support télescopique 227 est déployable et rétractable verticalement sous l'effet de l'action d'un moyen moteur 228 piloté par l'unité de traitement 3.

Le support télescopique 227 comprend un élément tubulaire inférieur 227a, de section droite polygonale, formant contenu portant le préhenseur et un élément tubulaire supérieur 227b, formant contenant, de section droite polygonale. L'élément tubulaire supérieur 227b reçoit en coulissement l'élément tubulaire inférieur. Une telle disposition de section droite polygonale s'oppose efficacement à la rotation de l'élément tubulaire inférieur par rapport à l'élément tubulaire supérieur. Le système préhenseur est en effet porté par l'élément inférieur de deux éléments coulissant l'un par rapport à l'autre. Cette fonctionnalité permet :
- la préhension sur l'aire de stockage d'objets de hauteurs différentes,
- de limiter en hauteur l'encombrement du chariot et ainsi optimiser l'utilisation des volumes et
- de faire circuler les objets transportés au-dessus des objets stockés et s'acquitter ainsi d'espaces réservés à la circulation.

Contrairement à des systèmes classiques, la totalité de la surface du magasin est utilisée comme aire de stockage.

Le moyen moteur 228 agit sur l'élément tubulaire inférieur 227a pour le déplacer verticalement dans l'élément tubulaire supérieur 227b, soit dans le sens de la rétraction c'est-à-dire vers le haut, soit dans le sens du déploiement, c'est-à-dire vers le bas.

Selon une forme préférée de réalisation, le moyen moteur 228 est constitué par un moteur électrique 228a monté en fixation en extrémité supérieure de l'élément tubulaire supérieur 227b. Ce moteur 228a comporte un arbre de sortie rotatif sur lequel est calée une poulie lisse 228b. Une courroie 228c s'enroule sur la jante de la poulie lisse 228b. L'extrémité inférieure de la courroie 228c est enserrée entre les mâchoires d'un système de pince 228d fixé à une traverse horizontale 228e interne à l'élément tubulaire inférieur 227a et est fixée en partie supérieure de l'élément tubulaire inférieur 227a. Alternativement, le moyen moteur 228 est constitué par un vérin de type connu.

Le moteur d'actionnement 223 de la vis 224, la vis 224 et les douilles filetées 225 sont montées dans l'élément tubulaire inférieur 227a. L'élément tubulaire inférieur 227a comprend, en partie inférieure, une paroi horizontale d'obturation. Cette paroi horizontale d'obturation comprend deux lumières longitudinales de passage des deux bras support. La partie inférieure de chaque bras et les griffes 220 de préhension sont externes à l'élément tubulaire inférieur 227a. Cette disposition de lumière assure l'immobilisation du bras en rotation par rapport à la vis 224 et, par voie de conséquence, l'immobilisation des douilles filetées 225 en rotation. Cette plaque d'obturation reçoit, dans le volume de l'élément tubulaire inférieur 227a, un support auquel est fixé le moteur d'actionnement 223. L'arbre de sortie du moteur d'actionnement 223 est accouplé à la vis 224, par l'intermédiaire d'une transmission à pignons dentés. La vis 224, par ses extrémités lisses est engagée dans deux paliers d'extrémité fixés à l'élément tubulaire inférieur 227a.

Dans une forme préférée de réalisation, l'élément tubulaire inférieur 227a est équipé, dans son volume interne, de colonnes verticales de guidage avec lesquelles coopèrent en guidage des galets de roulement montés dans des chapes fixées à l'élément tubulaire supérieur 227b.

En variante selon une autre disposition de l'invention, le magasin 1 de l'unité de fabrication comprend plusieurs aires de stockage 10 supportées par l'ossature support. Les aires de stockage 10 comprennent, chacune, leur propre robot manipulateur 2. De plus, un passeur vertical 14, connu en soi, est disposé d'une aire de stockage supérieure 10 à une aire de stockage inférieure 10. Ce passeur vertical peut être constitué par un dispositif monte charge piloté par l'unité de traitement et de commande 3.

L'unité de traitement et de commande 3 pilote les différents moteurs du robot manipulateur 2, en fonction d'ordres reçus. Cette unité de traitement et de commande 3 gère en automatique le stockage et la mise à disposition à différents postes de travail T, d'assemblage ou de contrôle un sous-ensemble de pièces ou des pièces devant rejoindre un sous-ensemble dans le but d'organiser un processus de production.

L'unité de traitement et de commande 3 pilote également les opérations effectuées sur les différents postes de travail T, suit et assure la traçabilité de leur exécution, le temps de réalisation de chacune et leur statut (à faire, en cours, terminé).

Outre les systèmes de reconnaissance classique tels que codes barres et puces RFID (acronyme de « RadioFréquence IDentification »), le ou chaque robot manipulateur peut être équipé de systèmes de pesée permettant la reconnaissance des pièces et sous-ensembles ou le contrôle de l'exécution des différentes taches du processus grâce à la gestion et au suivi de leur poids. De plus, dans des modes de réalisation, on effectue la saisie et la pesée automatisée d'une pièce devant subir des modifications telles que par exemple l'application d'un revêtement spécial, d'une peinture, ou un assemblage à une autre pièce ou à un sous-ensemble et dont la qualité de l'exécution peut être contrôlée au travers de la variation du poids de celle-ci ou du sous-ensemble.

Le système de pesée est connecté électriquement à l'unité de traitement 3. Ce système peut être associé à chaque bras 221 ou à chaque palette 220 et être constitué par un jeu de pesons, connus en soi, ou par un jeu de jauges de contraintes, connues en soi.

Comme on le comprend à la lecture de la description ci-dessus, le magasin 1 d'objets sous forme de matières premières ou de composants de base, comporte :
- une pluralité d'aires 10 de stockage des objets, au moins une aire 10 de stockage, dite supérieure, étant superposée à au moins une aire de stockage dite inférieure, chaque aire 10 de stockage comprenant plusieurs emplacements 11 de stockage des objets formés sur le sol de ladite aire 10 de stockage,
- au moins un passeur apte à déplacer des objets depuis une aire 10 de stockage supérieure à une aire 10 de stockage inférieure, et réciproquement,

- pour chaque aire de stockage supérieure, au moins un robot 2 manipulateur apte à prélever un objet dans l'un des emplacements 11 de stockage et le transporter vers un passeur, et réciproquement et
- pour chaque aire de stockage inférieure, au moins un robot 2 manipulateur apte à prélever un objet dans l'un des emplacements 11 de stockage et le transporter vers un poste de travail T, et réciproquement, et apte à prélever un objet dans le passeur et le transporter vers l'un des emplacement 11 de stockage ou vers un poste de travail T, et réciproquement,
chaque robot manipulateur 2 étant apte à évoluer au-dessus d'une aire 10 de stockage lors du transport.

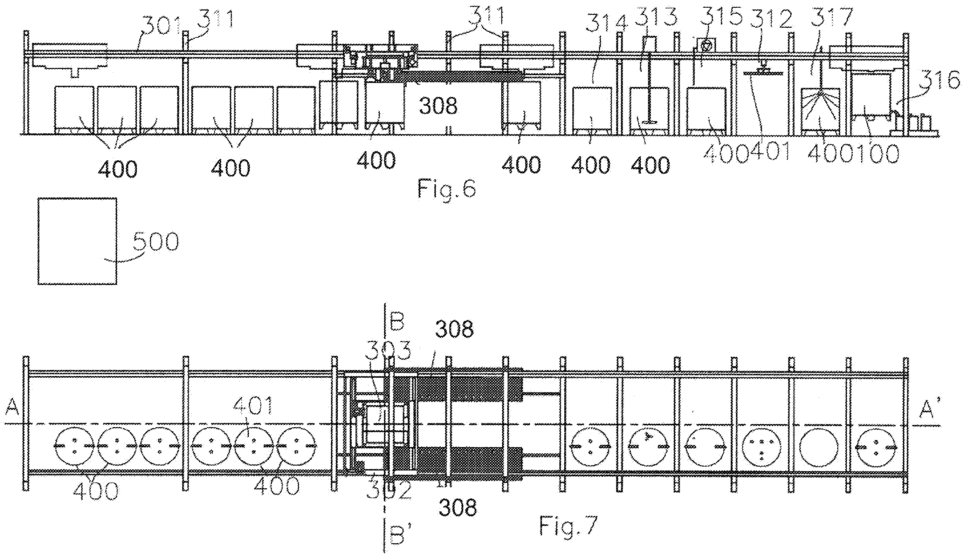

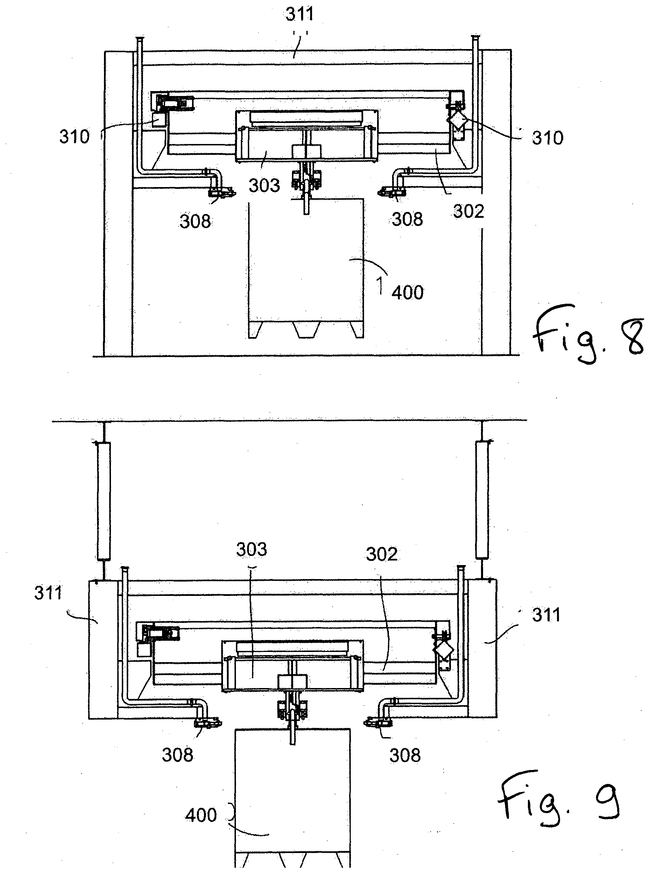

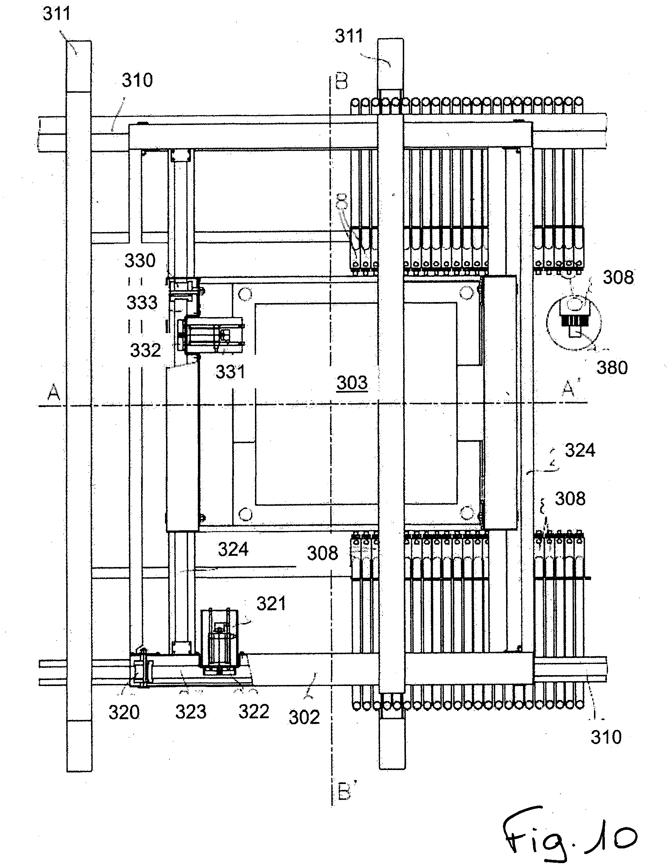

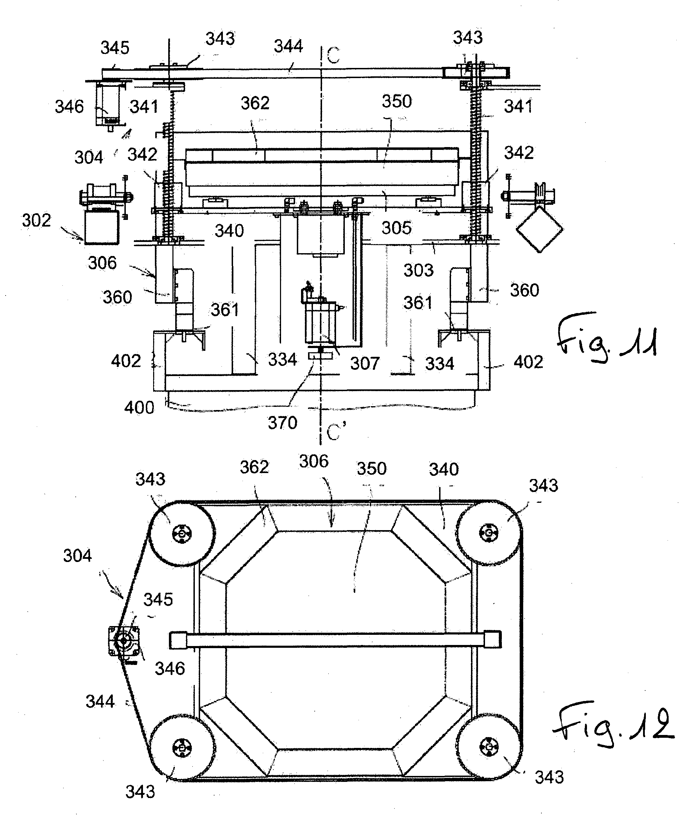

Dans le mode de réalisation illustré en figures 6 à 11, le magasin selon l'invention, comprend une unité de traitement et de gestion des signaux 500, un ensemble de guidage 301 disposé au-dessus d'une aire de stockage, un châssis support 302 porté par l'ensemble de guidage 301 et mobile sur ce dernier, selon un axe longitudinal AA' horizontal de la machine.

Chaque robot manipulateur comporte un chariot de transport 303 monté de manière mobile sur le châssis support 302 selon un axe BB' horizontal perpendiculaire à l'axe longitudinal AA' de la machine, un moyen élévateur 304 porté par le dit chariot 303, ledit moyen élévateur 304 comportant un élément porteur élévateur 340 mobile selon un axe vertical CC', un moyen de pesage 305 porté par l'élément porteur élévateur 340 dudit moyen élévateur 304, un moyen de préhension 306 des objets 400 unitairement lié mécaniquement au moyen de pesage 305. Plus précisément, le moyen de préhension 306 des objets 400 est lié mécaniquement à un organe 350 du moyen de pesage 305 prévu pour recevoir la charge à mesurer.

Préférentiellement, le retrait ou l'ajout d'une partie de l'objet 400, pendant le déplacement ou entre deux déplacements de l'objet 400, est détecté par pesage, préférentiellement en continu, de l'objet 400 au cours du déplacement de l'objet.

Comme on peut le voir, la machine s'étend au-dessus d'une zone de stockage des objets 400, dans laquelle les objets 400 occupent des positions assignées et sont par exemple disposées en rangées et colonnes.

L'unité de traitement et de gestion 500, connue en soi, que comporte la machine est apte à traiter les différents signaux électriques qu'elle reçoit des composants de la machine et à gérer le fonctionnement de ces derniers.

L'ensemble de guidage 301, selon la forme préférée de réalisation, comprend deux rails horizontaux parallèles 310 disposés selon un même niveau de hauteur, ces rails étant solidaires d'une structure porteuse 311. Cette structure porteuse 311 est avantageusement constituée par des montants verticaux fixés à la charpente du bâtiment abritant la machine ou bien, selon une autre forme de réalisation, par des portiques en appui par leur jambage sur le sol du bâtiment.

L'ensemble de guidage pourra être organisé en modules, joints les uns aux autres par tous moyens connus de l'homme de l'art.

Le châssis support 302 se présente sous la forme d'un cadre. Ce châssis 302 est équipé d'organes de roulement 320 engagés sur les rails de guidage 310, et d'un moyen moteur pour assurer son déplacement le long des rails. Préférentiellement, le moyen moteur comprend d'une part un moteur électrique pas-à-pas 321 dont l'arbre de sortie rotatif est équipé d'un pignon denté 322 et d'autre part une crémaillère 323 avec laquelle est engrené ledit pignon denté. Dans la pratique le pignon denté 322 est constitué par une poulie crantée et la crémaillère par une courroie crantée disposée à plat sur l'un des rails de guidage 310.

Une telle disposition est propice au contrôle du déplacement du châssis support 302 le long des rails 310 et au contrôle de la position de ce dernier. Cette position est déterminée comme connu par comptage du nombre d'impulsions électriques délivrées au moteur pas-à-pas.

Pour un contrôle absolu du déplacement et de la position du châssis, un codeur connu en soi pourra être accouplé à l'arbre de sortie du moteur pas-à-pas.

Pour minimiser les conséquences dues à la perte de l'information relative à la position du châssis support le long des rails 310, est prévue une butée mécanique installée fixement sur l'ensemble de guidage. Cette butée mécanique constitue un point de référence positionnelle. En présence d'une perte d'information, le châssis-support 303 est amené contre la butée afin que sa position soit initialisée.

Le châssis support 302 comprend deux rails de guidage 324 parallèles, horizontaux, disposés selon un même niveau de hauteur, les dits rails 324 étant perpendiculaires aux rails de guidage 310 de l'ensemble de guidage 301.

Le chariot 303 comprend une ossature tridimensionnelle, constituée par assemblage de longerons, montants et traverses. Cette ossature, en partie inférieure, est dotée d'organes de roulement 330 engagés sur les rails de guidage 324 du châssis support, et porte un moyen moteur apte à assurer son déplacement le long des rails de guidage 324. Comme décrit précédemment, le moyen moteur comprend d'une part un moteur électrique pas-à-pas 331 dont l'arbre de sortie rotatif est équipé d'un pignon denté 332 et d'autre part une crémaillère 333 avec laquelle est engrené le pignon denté 322. Préférentiellement le pignon denté 332 est constitué par une poulie crantée et la crémaillère est constituée par une courroie crantée disposée à plat sur l'un des rails de guidage 324. Le contrôle du déplacement et de la position du chariot 303 effectué par comptage du nombre d'impulsions électriques délivrées au moteur pas-à-pas 331.

Un codeur connu en soi pourra être accouplé à l'arbre de sortie du moteur pas-à-pas afin d'assurer le contrôle absolu du déplacement et de la position du chariot de transport.

Enfin de façon à minimiser les conséquences dues à la perte de l'information relative à la position du chariot le long des rails 324, une butée mécanique est installée fixement le châssis support. Cette butée mécanique constitue un point de référence positionnelle du chariot de sorte qu'en présence d'une perte d'information sur la position du chariot, ce dernier peut être amené contre la butée, afin que sa position puisse être initialisée.

Le moyen élévateur 304, porté par le chariot de transport, comprend un élément porteur élévateur 340 déplaçable en hauteur par un moyen moteur porté par le chariot de transport 303, le moyen de pesage 305 étant installé sur l'élément porteur élévateur 340. Cet élément porteur élévateur est avantageusement constitué par une platine horizontale 340.

Le moyen moteur peut être un vérin électrique, un vérin pneumatique, des poches gonflables et autres organes moteurs adaptés connus de l'homme du métier. Mais préférentiellement le moyen moteur est constitué par plusieurs colonnes filetées 341 verticales engagées par leur extrémité supérieure et inférieure dans des paliers de guidage portés par l'ossature du chariot de transport, par des écrous 342 engagés en vissage sur les colonnes 341 et fixés à la platine horizontale 340 et par un mécanisme d'actionnement en rotation des dites colonnes 341 autour de leur axe longitudinal.

Le mécanisme d'actionnement comprend des poulies crantées 343 accouplées respectivement aux colonnes filetées 341, une courroie crantée 344 engagée sur les poulies crantées 343 et sur un pignon cranté 345 accouplé à l'arbre de sortie rotatif d'un moteur pas-à-pas 346 installé fixement sur un support approprié fixé à l'ossature du chariot. Cette disposition de moteur pas-à-pas, de pignon cranté, de poulies crantées et de courroie crantée permet d'assurer un contrôle rigoureux du déplacement et de la position en hauteur de la platine 340.

Avantageusement, le moyen de pesage 305 est constitué par au moins une balance à plateau, le plateau de cette balance constituant l'organe 350 sur lequel est appliquée la charge à peser. Le moyen de pesage peut être constitué par une seule balance, mais, en variante, il peut être constitué par plusieurs balances superposées de gammes de pesée et de précisions différentes. La balance est apte à produire un signal électrique représentatif de la valeur de la charge pondérale qu'elle supporte. Ce signal est ensuite traité par l'unité de traitement et de gestion 500.

Le moyen de préhension 306, associé au moyen de pesage, est constitué par deux bras verticaux 360 dotés chacun en extrémité inférieure d'un crochet de préhension 361. Ces deux bras sont solidaires du plateau 350 de la balance 305. Dans la pratique, les deux bras verticaux 360 sont fixés par leur extrémité supérieure à un cadre 362 apposé sur le plateau de la balance 305.

De préférence, le chariot 303 est doté d'un carter de protection renfermant ses éléments mécaniques et électriques, ledit chariot 303 par ce carter de protection étant au-dessus des terminaisons de dispositifs de prélèvement. La disposition de caisson et la position de ce caisson évitent que les matières premières en cas de fuite ne viennent au contact des éléments mécaniques et électriques du chariot.

Par le moyen de préhension tel que décrit, le chariot 303 est amené à saisir l'objet 400 désigné par l'unité de traitement et de gestion. Par activation du mécanisme d'actionnement des colonnes 341, la platine 340, la balance et le moyen de préhension sont déplacés verticalement vers le haut et l'objet 400 se trouve soulevé du sol en vue d'être pesé et transporté. Avantageusement l'objet 400 n'est soulevé que de quelques millimètres ce qui accroît la sécurité de son transport.

Par déplacement du châssis support 302 le long des rails 310 et déplacement du chariot de transport le long des rails 324, l'objet 400 et le chariot sont disposés en regard du dispositif de prélèvement désigné par l'unité de traitement et de gestion. Plus précisément, le châssis support 302 est déplacé le long des rails de guidage 310 afin d'amener le chariot 303 en regard du dispositif de prélèvement et de délivrance désigné et ensuite, le chariot 303 est déplacé sur les rails de guidage 324 vers le dispositif 308 sélectionné afin que le mécanisme d'actionnement 307 dont il est doté soit amené en correspondance avec l'organe de commande 380 du dispositif de prélèvement 308.

Le fonctionnement de la machine est le suivant : le chariot 303 est positionné de manière automatique dans la zone de stockage au-dessus de l'objet 400. Le moyen de préhension est abaissé de façon à venir en prise avec l'objet 400 et ce dernier est soulevé de quelques millimètres au-dessus du sol et transporté. On note que le transport à très faible distance du sol contribue à la sécurité de cette opération. On note également que l'objet 400 est pesé au moins une fois et, préférentiellement, au moins à chaque extrémité du chemin suivi par l'objet 400. On détermine ainsi si l'objet 400 a été modifié, volontairement ou accidentellement, par ajout ou retrait d'une de ses parties.

Après avoir été traité à un poste de travail, l'objet 400 peut être ramenée à son aire de stockage ou bien être transportée par le chariot vers divers modules portés ou associés à la structure de l'ensemble de guidage.

Le module de conditionnement 316 a pour but de conditionner le contenu de l'un au moins des objets 400 dans des récipients appropriés, de taille réduite, par exemple des flacons ou autres. Le contrôle de la quantité de parties de l'objet retirées est effectué par dépesage et comparaison avec la perte de poids prévue par le système de gestion de stock.

De préférence, ces modules sont fixes par rapport à la structure de machine et forment divers postes de travail mais en variante un ou plusieurs de ces modules sont embarqués sur le chariot de transport de façon que plusieurs opérations puissent être effectuées en parallèles ou de manière simultanée.

Selon une seconde forme de réalisation, les crochets de préhension sont constitués chacun par une plaque verticale triangulaire, montée sur une embase horizontale, formant une pointe dirigée vers le haut et l'objet 400 comporte deux lumières oblongues de préhension 405, diamétralement opposées, prévues pour recevoir les crochets, formées dans au moins une saillie radiale 410 externe se présentant par exemple sous la forme d'une collerette. Cette disposition de crochets de préhension triangulaires et de lumières oblongues permet la saisie des objets 400 même si ces derniers sont légèrement décalés par rapport à leur emplacement de stockage et permet lors de la saisie le centrage de ces objets 100 par rapport au moyen de préhension.

Les lumières oblongues se développent chacune selon un arc de circonférence de cercle centré sur l'axe de révolution de l'objet 400. Cette disposition permet de rattraper un mauvais positionnement angulaire de l'objet 400 autour de son axe vertical de révolution et de rétablir une position angulaire adéquate de l'objet 400. En outre, la longueur de la base de chaque crochet de préhension est inférieure de un à deux mm à la longueur de la corde sous tendant l'arc de circonférence de cercle sus évoqué de manière un centrage relativement précis. Lors de sa suspension, l'objet 400 par la face inférieure de la collerette 110 vient en appui sur l'embase horizontale que présente chaque crochet.

En raison d'un décalage trop prononcé, l'objet 400 peut se trouver sur la trajectoire du moyen de préhension. Si tel est le cas, le moyen de préhension va être amené à percuter l'objet 400. Le choc en résultant est détecté par le moyen de pesage et un signal électrique est reçu par l'unité de traitement et de gestion 500. En raison de la géométrie cylindrique de l'objet 400, le chariot de transport subit, sous l'effet du choc, une poussée latérale sous l'effet de laquelle il se déplace dans un sens ou dans l'autre. Par analyse du sens du déplacement de ce chariot, l'unité de traitement pourra déterminer la nature du décalage droite ou gauche de l'objet 400, par rapport à son emplacement nominal. Il est alors possible par déplacements pas à pas de faible valeur, de positionner de manière adéquate le moyen de préhension par rapport à l'objet 400 afin que ce dernier soit saisi et ramené dans son emplacement.

La machine telle que précédemment décrite permet aussi la saisie et la pesée automatisée d'une pièce devant subir des modifications tels qu'un traitement de surface consistant par exemple en l'application d'un revêtement spécial, d'une peinture, d'un vernis, d'une colle voire même d'un sablage et dont la qualité de l'exécution peut être contrôlée au travers de la variation du poids de celle-ci.

Un exemple d'application de l'invention est l'organisation et la gestion de la production de compositions de matières premières (industrie de la parfumerie et des arômes par exemple).

Ainsi l'unité de traitement 3 et de commande gère, selon les applications de façon automatique :
- le stockage de pots vides et propres en attente de recevoir une composition,
- la mise à disposition de contenants en entrée de machines de composition,
- la récupération de contenants en sortie de machine de production,
- la mise en quarantaine de contenants suivant des critères définis,
- la mise à dispositions de contenants de postes de pesée manuelle pour complément,
- le positionnement de contenant sur un poste d'agitation pour une durée déterminée,
- le positionnement de contenants sur un poste de chauffe ou refroidissement,
- la mise à disposition d'un poste dit de regroupement de plusieurs contenants devant être rassemblés,
- la mise à disposition de contenants de postes de contrôle tels que colorimétrie ou chromatographie et/ou
- la mise à disposition automatique ou sur appel des contenants dont la production est terminée.

### Avantages de l'invention.

Les avantages du magasin et de l'unité de production objets de la présente invention comportent les suivants :
Les postes de travail sont alimentés de façon organisée et coordonnée suivant leur fonction et leur disponibilité. Un des grands avantages de ce mode de fonctionnement est que la production ne se fait jamais en ligne (problématique en cas d'indisponibilité d'une des ressources), le stockage faisant office de tampon entre les ressources en plus d'apporter à chacun de l'autonomie.

Les magasins classiques organisés sur le principe de racks verticaux espacés d'allées de circulation des robots. Le magasin tel que décrit optimise sensiblement la surface au sol disponible puisqu'il ne nécessite pas de réserver une partie importante de celle-ci à la circulation des robots (les robots circulent au dessus des éléments stockés).

La capacité de stockage peut être sensiblement augmentée par la superposition et/ou la juxtaposition de plusieurs magasins tels que décrits.

Les robots se caractérisent par leur système de manutention permettant la manipulation de pièces unitaires, palettes, caisses, ou cuves de dimensions et formes variées.

Le fonctionnement trois axes des robots offre une grande modularité dans l'organisation du système. Les robots peuvent ainsi déposer ou récupérer à une infinité de positions et de hauteurs des éléments dont ils ont la responsabilité. Un poste de travail peut être ajouté ou supprimé sans aucune modification mécanique (ajout ou suppression de convoyeur, modification des rails de roulement des robots dans le cadre d'un magasin automatique classique) mais simplement en renseignant le système d'une nouvelle adresse à desservir.

Les postes de travail sont positionnés autour du magasin. Les fonctions de stockage, de manutention et mise à disposition ou récupération des ordres de production sur les postes de travail, de gestion de priorité et de zone tampon sont ainsi assurées sans qu'aucun système de convoyage ni d'aiguillage complexe ne soit nécessaire.

Il va de soi que la présente invention peut recevoir tous aménagements et variantes du domaine des équivalents techniques sans pour autant sortir du cadre du présent brevet tel que défini par les revendications ci-après.

## Revendications

1. Magasin (1) d'objets sous forme de matières premières ou de composants de base, qui comporte :
- une pluralité d'aires (10) de stockage des objets, au moins une aire (10) de stockage, dite supérieure, étant superposée à au moins une aire de stockage dite inférieure, chaque aire (10) de stockage comprenant plusieurs emplacements (11) de stockage des objets formés sur le sol de ladite aire (10) de stockage,
- au moins un passeur apte à déplacer des objets depuis une aire (10) de stockage supérieure à une aire (10) de stockage inférieure, et réciproquement,
- pour chaque aire de stockage supérieure, au moins un robot (2) manipulateur apte à prélever un objet dans l'un des emplacements (11) de stockage et le transporter vers un passeur, et réciproquement et
- pour chaque aire de stockage inférieure, au moins un robot (2) manipulateur apte à prélever un objet dans l'un des emplacements (11) de stockage et le transporter vers un poste de travail (T), et réciproquement, et apte à prélever un objet dans le passeur et le transporter vers l'un des emplacement (11) de stockage ou vers un poste de travail (T), et réciproquement,
chaque robot manipulateur (2) étant apte à évoluer au-dessus d'une aire (10) de stockage lors du transport ;
dans lequel au moins un robot manipulateur (2) est monté de manière mobile sur deux rails horizontaux (13) installés fixement au-dessus et à distance de l'aire de stockage (10) et au-dessus de deux côtés de ladite aire de stockage, ce robot manipulateur (2) comprenant un support horizontal (20) motorisé monté de manière mobile sur les deux rails (13), ledit support horizontal (20) étant formé de deux longerons (200) perpendiculaires à la direction des rails de guidage (13), ledit robot manipulateur (2) comprenant de plus un chariot motorisé (21) monté de manière mobile sur et le long des deux longerons (200) du support horizontal motorisé, ledit chariot motorisé (21) portant une tête de préhension (22) mobile de bas en haut et réciproquement ;
dans lequel la tête de préhension (22) comprend un préhenseur comprenant deux griffes de préhension opposées (220), deux bras support (221) verticaux, portant respectivement, en extrémité inférieure, les deux griffes de préhension (220), et un mécanisme moteur (223, 224) d'actionnement des deux bras support (221) en éloignement ou rapprochement l'un de l'autre ;
**caractérisé en ce que** le mécanisme moteur d'actionnement comprend un organe moteur (223) possédant un arbre de sortie rotatif accouplé à une vis horizontale (224) d'actionnement, fixe en translation, comprenant deux zones filetées opposées, dont une possède un pas à droite et l'autre un pas à gauche, chaque zone filetée recevant une douille filetée (225), fixe en rotation, les deux bras support (221) étant portés, pour l'un, par l'une des douilles filetées (225) et, pour l'autre, par l'autre douille filetée (225) et les dits bras support (221) s'étendant vers le bas depuis les douilles filetées (225).

2. Magasin (1), selon la revendication 1, dans lequel chaque griffe de préhension (220) se présente sous la forme d'une paroi plane horizontale fixée par une de ses bordures au bras support (221) correspondant, la bordure opposée de la griffe de préhension (220) présentant une échancrure de dégagement.

3. Magasin (1) selon l'une des revendications 1 ou 2, dans lequel le préhenseur de la tête de préhension (22) est porté en extrémité inférieure d'un support télescopique (227) de la tête de préhension (22), ledit support télescopique (227) étant déployable et rétractable verticalement sous l'effet de l'action d'un moyen moteur (228).

4. Magasin (1) selon la revendication 3, dans lequel le support télescopique (227) comprend un élément tubulaire inférieur (227a), contenu, de section droite polygonale et un élément tubulaire supérieur (227b) contenant, de section droite polygonale, recevant en coulissement l'élément tubulaire inférieur (227a).

5. Magasin (1) selon la revendication 4, dans laquelle l'organe moteur (223) d'actionnement de la vis horizontale (224), ladite vis et les douilles filetées (225) sont montées dans l'élément tubulaire inférieur (227a) et que ledit élément tubulaire inférieur (227a) comprend en partie inférieure une paroi horizontale d'obturation comprenant deux lumières longitudinales de passage des deux bras support (221), la partie inférieure de chaque bras support (221) et les griffes de préhension (220) étant externes à l'élément tubulaire inférieur (227a).

6. Magasin (1) selon l'une des revendications 1 à 5, qui présente une ossature support (12) et plusieurs aires de stockage (10) supportées par l'ossature support (12), lesdites aires de stockage (10) comprenant leur propre robot manipulateur (2), un passeur vertical étant disposé entre deux aires de stockage (10).

7. Magasin (1) selon l'une des revendications 1 à 6, qui comprend :
- un ensemble de guidage (301) disposé au-dessus du sol,
dans lequel au moins un robot manipulateur comporte :
- un châssis support (302) porté par l'ensemble de guidage et mobile sur ce dernier, selon un axe longitudinal horizontal (AA') de la machine ;
- un chariot de transport (303), monté de manière mobile sur le châssis support selon un axe horizontal (BB') perpendiculaire à l'axe longitudinal (AA') de la machine,
- un moyen élévateur (304) porté par le dit chariot, ledit moyen élévateur comportant un élément porteur élévateur (340) mobile selon un axe vertical,
- un moyen de pesage (305) porté par l'élément porteur élévateur du moyen élévateur, ledit moyen de pesage comportant un organe (350) sur lequel est appliquée la charge à peser et
- un moyen de préhension (306) des objets (400) unitairement, lié mécaniquement à l'organe du moyen de pesage.

8. Magasin (1) selon la revendication 7, dans lequel le châssis support (302) comprend deux rails de guidage parallèles horizontaux (324), disposés selon un même niveau de hauteur, les dits rails étant perpendiculaires aux rails (310) de l'ensemble de guidage (301), dans lequel le chariot (303) est doté d'organes de roulement (330) engagés sur les rails de guidage (324) du châssis support (302), le chariot étant équipé d'un organe moteur (331) pour assurer son déplacement le long des dits rails de guidage (324).

9. Magasin (1), selon l'une des revendications 7 ou 8, dans lequel l'élément porteur élévateur (340) du moyen élévateur (304) est constitué par une platine horizontale (340) et que cet élément porteur élévateur (340) est déplaçable en hauteur par un moyen moteur porté par le chariot de transport (303), le moyen de pesage (305) étant installé sur la platine horizontale.

10. Magasin (1) selon la revendication 9, dans lequel le moyen moteur du moyen élévateur (304) est constitué par plusieurs colonnes filetées (341) verticales engagées par leur extrémité supérieure et inférieure dans des paliers de guidage portés par l'ossature du chariot (303), par des écrous (342) engagés en vissage sur les colonnes (341) et fixés à la platine horizontale (340) et par un mécanisme d'actionnement en rotation des dites colonnes (341) autour de leur axe longitudinal, lequel mécanisme comprend des poulies crantées (343) accouplées respectivement aux colonnes filetées (341), une courroie crantée (344) engagée sur les poulies crantées (343) et sur un pignon cranté (345) accouplé à l'arbre de sortie rotatif d'un moteur pas à pas (346) installé fixement sur un support approprié fixé à l'ossature du chariot (303).

11. Magasin (1) selon l'une des revendications 7 à 10, dans lequel le moyen de pesage (340) est constitué par au moins une balance comportant un plateau (350).

12. Magasin (1) selon l'une des revendications 7 à 11, dans lequel le moyen de préhension (306) est constitué par deux bras verticaux (360) doté en extrémité inférieure de deux crochets de préhension (361).

13. Magasin (1) selon les revendications 11 et 12 prises ensemble, dans lequel les deux bras (360) du système de préhension (306) sont solidaires du plateau (350) de la balance.

14. Magasin (1) selon l'une des revendications 7 à 13, qui est équipée d'une unité de traitement et de gestion (500) apte à traiter les différents signaux électriques qu'elle reçoit des divers composants et apte à gérer le fonctionnement de ces derniers.

15. Unité de production de produits manufacturés, comprenant :
- un magasin (1) selon l'une des revendications 1 à 14 et
- au moins un poste de travail (T) à proximité du magasin (1),
chaque poste de travail (T) étant disposé de manière attenante à une aire (10) de stockage du magasin (1).

## Patentansprüche

1. Speicher (1) für Gegenstände in Form von Rohstoffen oder Grundkomponenten, der umfasst:
- eine Vielzahl von Plätzen (10) zum Lagern der Gegenstände, wobei zumindest ein Platz (10) zum Lagern, der oberer Lagerplatz genannt wird, auf zumindest einem Lagerplatz, der unterer Lagerplatz genannt wird, überlagert ist, wobei jeder Platz (10) zum Lagern mehrere Plätze (10) zum Lagern der Gegenstände umfasst, die auf dem Boden des besagten Platzes (10) zum Lagern gebildet werden,
- zumindest einen Wechsler, der imstande ist, die Gegenstände von einem oberen Platz (10) zum Lagern auf einen unteren Platz (10) zum Lagern, und umgekehrt, zu bewegen,
- für jeden oberen Platz zum Lagern zumindest einen Handling-Roboter (2), der imstande ist, einen Gegenstand an einem Stellplatz (11) zum Lagern zu entnehmen, und ihn zu einem Wechsler zu transportieren, und umgekehrt, und
- und für jeden unteren Platz zum Lagern zumindest einen Handling-Roboter (2), der imstande ist, einen Gegenstand an einem Stellplatz (11) zum Lagern zu entnehmen, und ihn zu einem Arbeitsplatz (T) zu transportieren, und umgekehrt, und der imstande ist, einen Gegenstand in dem Wechsler zu entnehmen, und ihn zu einem Stellplatz (11) zum Lagern oder zu einem Arbeitsplatz (T) zu transportieren, und umgekehrt,
wobei jeder Handling-Roboter (2) imstande ist, beim Transport über einem Platz (10) zum Lagern tätig zu werden;
wobei zumindest ein Handling-Roboter (2) beweglich auf zwei horizontalen Schienen (13) montiert ist, die feststehend oberhalb und auf Abstand zu dem Lagerplatz (10) und oberhalb von zwei Seiten des besagten Lagerplatzes installiert sind, wobei dieser Handling-Roboter (2) einen motorisierten horizontalen Träger (20) umfasst, der auf den beiden Schienen (13) beweglich montiert ist, wobei der besagte horizontale Träger (20) aus zwei Längsholmen (200) senkrecht zur Richtung der Führungsschienen (13) gebildet wird, wobei der besagte Handling-Roboter (2) darüber hinaus einen motorisierten Schlitten (21) umfasst, der beweglich auf und entlang der beiden Längsholme (200) des motorisierten horizontalen Trägers montiert ist, wobei der besagte motorisierte Schlitten (21) einen Greifkopf (22) trägt, der von unten nach oben und umgekehrt beweglich ist;
wobei der Greifkopf (22) einen Greifer umfasst, der zwei gegenüberliegende Greifkrallen (220) umfasst, zwei vertikale Trägerarme (221), die jeweils am unteren Ende die beiden Greifkrallen (220) tragen, und einen motorgetriebenen Mechanismus (223, 224) zur Betätigung der beiden Trägerarme (221) zum Entfernen oder Annähern von- und zueinander;
**dadurch gekennzeichnet, dass** der motorgetriebene Mechanismus zur Betätigung ein Motororgan (223) umfasst, das eine drehende Ausgangswelle besitzt, die mit einem in Vorschubrichtung feststehenden horizontalen Gewindetrieb (224) gekoppelt ist, zwei gegenüberliegende Gewindezonen umfassend, von denen eine ein Rechtsgewinde, und die andere ein Linksgewinde besitzt, wobei jede Gewindezone eine in der Drehrichtung feststehende Gewindehülse (225) aufnimmt, wobei die beiden Trägerarme (221) einerseits durch die eine der Gewindehülsen (225) getragen werden, und andererseits durch die andere Gewindehülse (225) und sich die besagten Trägerarme (221) von den Gewindehülsen (225) aus nach unten erstrecken.

2. Speicher (1) nach Anspruch 1, wobei sich jede Greifkralle (220) in Form einer ebenen horizontalen Wand darstellt, die an einem ihrer Ränder an dem entsprechenden Trägerarm (221) befestigt ist, wobei der gegenüberliegende Rand der Greifkralle (220) einen Ausnehmungsausschnitt aufweist.

3. Speicher (1) nach einem der Ansprüche 1 oder 2, wobei der Greifer des Greifkopfes (22) am unteren Ende von einem Teleskopträger (227) des Greifkopfes (22) getragen wird, wobei der besagte Teleskopträger (227) unter der Wirkung der Betätigung eines Motormittels (228) ein- und ausgefahren werden kann.

4. Speicher (1) nach Anspruch 3, wobei Teleskopträger (227) ein unteres enthaltenes röhrenförmiges Element (227a) mit polygonalem Querschnitt umfasst, sowie ein oberes aufnehmendes röhrenförmiges Element (227b) mit polygonalem Querschnitt, welches das untere röhrenförmige Element (227a) aufnimmt.

5. Speicher (1) nach Anspruch 4, wobei das Motororgan (223) zur Betätigung des horizontalen Gewindetriebs (224), die Schnecke und die Gewindehülsen (225) in dem unteren röhrenförmigen Element (227a) montiert sind, und das besagte untere röhrenförmige Element (227a) im unteren Abschnitt eine horizontale Verschlusswand umfasst, welche zwei längliche Langlöcher zur Durchführung der beiden Trägerarme (221) umfasst, wobei der untere Abschnitt eines jeden Trägerarmes (221) und die Greifkrallen (220) außerhalb des unteren röhrenförmigen Elements (227a) liegen.

6. Speicher (1) nach einem der Ansprüche 1 bis 5, der eine Träger-Unterkonstruktion (12) und mehrere Lagerplätze (10) aufweist, die von der Träger-Unterkonstruktion (12) getragen werden, wobei die besagten Lagerplätze (10) ihren eigenen Handling-Roboter (2) umfassen, wobei ein vertikaler Wechsler zwischen zwei Lagerplätzen (10) angeordnet ist.

7. Speicher (1) nach einem der Ansprüche 1 bis 6, der umfasst:
- eine Führungseinheit (301), die über dem Boden angeordnet ist,
wobei zumindest ein Handling-Roboter umfasst:
- ein Trägergestell (302), das von der Führungseinheit getragen wird und auf letzterer entlang einer horizontalen Längsachse (AA') der Maschine bewegt werden kann;
- einen Transportschlitten (303), der auf dem Trägergestell entlang einer horizontalen Achse (BB') senkrecht zur Längsachse (AA') der Maschine beweglich montiert ist,
- ein Hebemittel (304), das von dem besagten Schlitten getragen wird, wobei das besagte Hebemittel ein entlang einer vertikalen Achse bewegliches Hebe-Trägerelement (340) umfasst,
- ein Wiegemittel (305), das von dem Hebe-Trägerelement des Hebemittels getragen wird, wobei das besagte Wiegemittel ein Organ (350) umfasst, auf dem die zu wiegende Last angelegt wird, und
- ein Greifmittel (306) für die Gegenstände (400), einzeln, mechanisch mit dem Wiegemittel verbunden.

8. Speicher (1) nach Anspruch 7, wobei das Trägergestell (302) zwei horizontale parallele Führungsschienen (324) umfasst, die auf einer selben Höhenstufe angeordnet sind, wobei die besagten Schienen senkrecht zu den Schienen (310) der Führungseinheit (301) stehen, wobei der Schlitten (303) mit Lagerorganen (330) versehen ist, die in die Führungsschienen (324) des Trägergestells (302) eingreifen, wobei der Schlitten mit einem Motororgan (331) ausgestattet ist, um für dessen Bewegung entlang der besagten Führungsschienen (324) zu sorgen.

9. Speicher (1) nach einem der Ansprüche 7 oder 8, wobei das Hebe-Trägerelement (340) des Hebemittels (304) durch eine horizontalen Platte (340) gebildet wird, und dieses Hebe-Trägerelement (340) in der Höhe durch ein Motormittel verschoben werden kann, das von dem Transportschlitten (303) getragen wird, wobei das Wiegemittel (305) auf der horizontalen Platte installiert ist.

10. Speicher (1) nach Anspruch 9, wobei das Motormittel des Hebemittels (304) aus mehreren vertikalen Gewindesäulen (341) gebildet wird, die mit ihrem oben und unteren Ende in die Führungslager eingreifen, die von der Unterkonstruktion des Schlittens (303) durch Muttern (342) getragen werden, die in die Säulen (341) eingeschraubt und an der horizontalen Platte (340) durch einen Drehbetätigungsmechanismus der besagten Säulen (341) um ihre Längsachse befestigt sind, welcher Mechanismus Zahnscheiben (343) umfasst, die jeweils in die Gewindesäulen (341) eingreifen, einen Zahnriemen (344), der in die Zahnscheiben (343) und in das Ritzel (345) eingreift, das mit der drehenden Ausgangswelle eines Schrittmotors (346) verbunden ist, der feststehend auf einem geeigneten Träger installiert ist, der auf dem Unterbau des Schlittens (303) befestigt ist.

11. Speicher (1) nach einem der Ansprüche 7 bis 10, wobei das Wiegemittel (340) durch zumindest eine Waage gebildet wird, die eine Platte (350) umfasst.

12. Speicher (1) nach einem der Ansprüche 7 bis 11, wobei das Greifmittel (306) durch zwei vertikale Arme (360) gebildet wird, die am unteren Ende mit zwei Greifhaken (361) versehen sind.

13. Speicher (1) nach den Ansprüchen 11 und 12 gemeinsam, wobei die beiden Arme (360) der Greifsystems (306) fest mit der Platte (350) der Waage verbunden sind.

14. Speicher (1) nach einem der Ansprüche 7 bis 13, der mit einer Behandlungs- und Verwaltungseinheit (500) ausgestattet ist, die imstande ist, die verschiedenen elektrischen Signale, die sie von den verschiedenen Komponenten empfängt, zu behandeln, und imstande ist, den Betrieb von letzteren zu verwalten.

15. Produktionseinheit für Verarbeitungserzeugnisse, umfassend:
- einen Speicher (1) nach einem der Ansprüche 1 bis 14 und
- zumindest einen Arbeitsplatz (T) in der Nähe des Speichers (1),
wobei jeder Arbeitsplatz (T) an einen Platz (10) zum Lagern des Speichers (1) angrenzend angeordnet ist.

## Claims

1. Stores (1) for items in the form of raw materials or basic components, which comprises:
- a plurality of item storage areas (10), at least one storage area (10), referred to as upper, being superimposed on at least one storage area, referred to as lower, each storage area (10) comprising a number of item storage locations (11) formed on the floor of said storage area (10);
- at least one carrier able to move items from an upper storage area (10) to a lower storage area (10), and vice versa;
- for each upper storage area, at least one manipulator robot (2) able to pick up an item from one of the storage locations (11) and transport it to a carrier, and vice versa; and
- for each lower storage area, at least one manipulator robot (2) able to pick up an item from one of the storage locations (11) and transfer it to a workstation (T), and vice versa, and able to pick up an item from the carrier and transport it to one of the storage locations (11) or to a workstation (T), and vice versa,
each manipulator robot (2) being able to move over a storage area (10) during the transport; wherein at least one manipulator robot (2) is mounted so as to be mobile on two horizontal rails (13) fixedly installed above and at a distance from the storage area (10) and above two sides of said storage area, this manipulator robot (2) comprising a motorized horizontal base (20) mounted so as to be mobile on the two rails (13), said horizontal base (20) being formed of two side-members (200) perpendicular to the direction of the guide rails (13), said manipulator robot (2) also comprising a motorized carriage (21) mounted so as to be mobile on and along the two side-members (200) of the motorized horizontal base, said motorized carriage (21) bearing a grasping head (22) movable from bottom to top and vice versa; wherein the grasping head (22) comprises a gripper comprising two opposed grasping claws (220), two vertical carrying arms (221) respectively bearing the two grasping claws (220) on their lower extremity, and an actuator motor mechanism (223, 224) for moving the two carrying arms (221) further from or closer to each other;
**characterized in that** the actuator motor mechanism comprises a motor unit (223) having a rotary output shaft coupled to a horizontal actuator screw (224), fixed in translation, comprising two opposed threaded areas, one of which has a right thread and the other a left thread, each threaded area receiving a threaded bush (225), fixed in rotation, one of the two carrying arms (221) being borne by one of the threaded bushes (225) and the other by the other threaded bush (225), and said carrying arms (221) extending downwards from the threaded bushes (225).

2. Stores (1) according to claim 1, wherein each grasping claw (220) is in the form of a flat horizontal partition fastened by one of its edges to the corresponding carrying arm (221), the opposite edge of the grasping claw (220) having a release indentation.

3. Stores (1) according to one of claims 1 or 2, wherein the gripper of the grasping head (22) is borne on the lower extremity of a telescopic mount (227) of the grasping head (22), said telescopic mount (227) being deployable and retractable vertically under the action of a motor mechanism (228).

4. Stores (1) according to claim 3, wherein the telescopic mount (227) comprises a contained lower tubular element (227a) with a straight polygonal cross-section, and a containing upper tubular element (227b) with a straight polygonal cross-section, slidingly receiving the lower tubular element (227a).

5. Stores (1) according to claim 4, wherein the motor unit (223) for actuating the horizontal screw (224), said screw and the threaded bushes (225) are mounted in the lower tubular element (227a) and said lower tubular element (227a) comprises in a lower portion a horizontal sealing partition comprising two longitudinal openings for the passage of the two carrying arms (221), the lower portion of each carrying arm (221) and the grasping claws (220) being outside the lower tubular element (227a).

6. Stores (1) according to one of claims 1 to 5, comprising a supporting framework (12) and several storage areas (10) borne by the supporting framework (12), said storage areas (10) comprising their own manipulator robot (2), a vertical carrier being positioned between two storage areas (10).

7. Stores (1) according to one of claims 1 to 6, which comprises:
- a guide assembly (301) positioned above the floor,
wherein at least one manipulator robot comprises:
- a carrying frame (302), borne by and mobile on the guide assembly along a longitudinal horizontal axis (AA') of the machine;
- a transport carriage (303), mounted so as to be mobile on the carrying frame along a horizontal axis (BB') perpendicular to the longitudinal axis (AA') of the machine;
- a lifting means (304) borne by said carriage, said lifting means comprising a lifting carrier element (340) mobile along a vertical axis;
- a weighing means (305) borne by the lifting carrier element of the lifting means, said weighing means comprising a unit (350) on which the load to be weighed is placed; and
- a means for grasping (306) items (400) individually, linked mechanically to the unit of the weighing means.

8. Stores (1) according to claim 7, wherein the carrying frame (302) comprises two parallel horizontal guide rails (324) positioned at the same height, said rails being perpendicular to the guide rails (310) of the guide assembly (301), wherein the carriage (303) is equipped with running gear (330) engaged on the guide rails (324) of the carrying frame (302), the carriage being equipped with a motor unit (331) to perform its movement along said guide rails (324).

9. Stores (1) according to one of claims 7 or 8, wherein the lifting carrier element (340) of the lifting means (304) is formed of a horizontal plate (340) and this lifting carrier element (340) is vertically movable by a motor means borne by the transport carriage (303), the weighing means (305) being installed on the horizontal plate.

10. Stores (1) according to claim 9, wherein the motor means (304) is formed of several vertical threaded columns (341) engaged by their upper and lower extremity in guide bearings borne by the framework of the transport carriage (303), by nuts (342) engaged by screwing on the columns (341) and fastened to the horizontal plate (340), and by a mechanism for actuating said columns (341) in rotation around their longitudinal axis, said mechanism comprising toothed pulleys (343) coupled respectively to the threaded columns (341), a toothed belt (344) engaged on the toothed pulleys (343) and on a toothed gear (345) coupled to the rotary output shaft of a stepping motor (346) fixedly installed on a suitable mount fastened to the framework of the carriage (303).

11. Stores (1) according to one of claims 7 to 10, wherein the weighing means (340) is formed of at least one balance comprising a pan (350).

12. Stores (1) according to one of claims 7 to 11, wherein the grasping means (306) is formed of two vertical arms (360) equipped in their lower extremity with two grasping hooks (361).

13. Stores (1) according to claims 11 and 12 taken together, wherein the two arms (360) of the grasping system (306) are secured to the pan (350) of the balance.

14. Stores (1) according to one of claims 7 to 13, which is equipped with a processing and management unit (500) able to process the different electrical signals that it receives from the various components, and able to manage their operation.

15. Production unit for manufactured products, comprising:
- a stores (1) according to one of claims 1 to 14; and
- at least one workstation (T) near the warehouse (1),
each workstation (T) being positioned adjacent to a storage area (10) of the warehouse (1).
